# EUROPEAN PATENT APPLICATION

(11) **EP 4 411 328 A1**
(43) Date of publication of application: **07.08.2024**
(21) Application number: 22875234.1
(22) Date of filing: 09.09.2022
(51) Int. Cl.: G01F 11/28, A01G 25/02, A01G 25/16, G01D 21/02, G01F 7/00

(54) **NON-DESTRUCTIVE INSTRUMENT FOR MEASURING PRESSURE AND FLOW RATE IN A DRIPPER HOSE**

(30) Priority: 29.09.2021 ES 202100369 U
(71) Applicant: Zerolo Hernández, Jorge Manuel, 38002 Santa Cruz de Tenerife (ES)
(72) Inventor: Zerolo Hernández, Jorge Manuel, 38002 Santa Cruz de Tenerife (ES)
(86) International application number: PCT/ES2022/000035
(87) International publication number: WO 2023/052657

(57) **Abstract**

The present invention relates to a non-destructive instrument for measuring pressure and flow rate in a dripper hose, said instrument characterized in that it has a manometric clamp that embraces the hose and connects the outlet opening of the dripper with the manometer, forming a sealed chamber due to the pressure exerted on the two arms of the clamp by way of pincers; and a graded measuring vessel, which allows the flow rate to be determined with a single hand.

## Description

### Technical sector

Drip irrigation is an agricultural technique for distributing water in a localized manner. Hoses with inserted drippers are distributed over the ground, called drip hose. Drippers are emitters which, when inserted into the hose, release the water into the atmosphere at a very low flow rate, up to a maximum of 4.44 · 10⁻⁶ m³/s.

A decisive factor for efficient irrigation is to ensure that all drippers emit a flow rate that is within the target range of the hydraulic design of the installation.

This concept is reflected by the System Uniformity Coefficient (CUs), the ideal value being 100% (all drippers emit a flow rate within the target range).

Determining the CUs must be done after receiving a new installation and it is advisable to maintain an annual frequency and even advance it in the event of observations of irregularity in the development of the crop.

The only way to calculate the CUs is by measuring the flow rates and pressure of the drippers. I attach some interesting web links to learn about the methodology.
- https://www.portalfruticola.com/noticias/2016/03/04/como-medir-la-uniformidad-de-riego-en-los-cultivos/
- http://scielo.sld.cu/pdf/rcta/v20n1/rcta07111.pdf

The measurement of flow and pressure is very laborious as it has to be done in all the drippers that irrigate 16 plants of each irrigation unit.

### Background of the invention

Although I have not found any similar devices in the various patent search engines, there are currently two devices that are used to determine the pressure. As far as measuring the flow rate of a dripper is concerned, only a container, a measuring cylinder and a stopwatch are used.

A manometer with a hollow needle is used to determine the pressure. The connection between these two elements must be watertight and is achieved by the nut, where the manometer screwed, located at the opposite end to the pointy part of the needle. Together these two elements, manometer and needle, proceed to take pressure readings. To do this, it is necessary to press manually until the needle completely pierces the thickness of the hose wall. The reading can be done thanks to the water entering through the hole in the needle until it reaches the manometer that will give us the pressure value at the point of the perforation. When you remove the needle, a hole remains that needs to be plugged.

The other alternative for pressure measurement is to connect a manometric connection spigot to the drip hose at the point where we want to take a reading. This element is punctured into the hose and remains permanently in place. By inserting the needle of the manometer through the orifice of the hole, we force the opening of an elastic seal, which allows the needle body into the hose. When the reading is finished the needle is withdrawn and the elastic seal returns to its rest position, preventing the water from escaping through the orifice of the gauge tapping.

To determine the flow rate, a stopwatch is activated simultaneously and a container is placed under the dripper. Restarting the test is often required since the drop frequently travels down the hose and ends up outside the container. This can be prevented by holding the hose in a valley with both hands so that the drop is released from the hose at its lowest position, where the container must be positioned. In order to conclude, the timer is halted and the beaker is simultaneously taken out. The volume of water is measured using a graduated cylinder or by weight, having previously tared the vessel. The flow rate is derived from the volume ratio collected and time elapsed.

### Explanation of the invention

The invention consists of two elements, a manometric clamp and a graduated measuring vessel. The manometric clamp makes it possible to create a watertight chamber on the dripper hose into which a dripper pours water. In this chamber, there is a connection for a manometer and an opening to the atmosphere which allows the insertion of a flexible microtube that is coupled to the graduated measuring vessel. This achieves three objectives:
1. In a single procedure we measure the pressure from the drip hose and the flow rate of the dripper.
   - To measure the pressure from the drip hose, the microtube is clamped by hand in order to pressurize the sealed chamber and to be able to read the manometer when it is stabilized.
   - To determine the flow rate, open the microtube and attach it to the measuring vessel with one hand while the other hand is used to operate the stopwatch.
2. To be able to make the measurements at any point in the hose where there is a dripper.
3. Non-destructive as there is no need to perforate the dripper hose.

The physical basis of the invention consists of canceling the exit velocity of the water through the dripper and so the friction head loss between the dripper entering and leaving point.

As the chamber fills with water from the dripper, the seal causes an increase in pressure until the hose's internal pressure is reached.

The water stops flowing at this pressure equilibrium, its velocity is zero, and with this the head loss is nullified. The pressure reading reflected by the manometer will be equal to that of the water flowing through the hose at that point.

The graduated measuring vessel makes it easier to determine the flow rate. The flexible microtube is opened following the pressure measurement, opening the chamber outlet to the atmosphere.

A microtube is used to feed water into the measuring vessel. Because a stopwatch must be used simultaneously, the vessel is made to be operated with one hand. In order to minimize unintentional leaks, it features a spike to pin up the vessel into the ground and a rapid connection to secure the microtube to the vessel.

### Brief description of the drawings

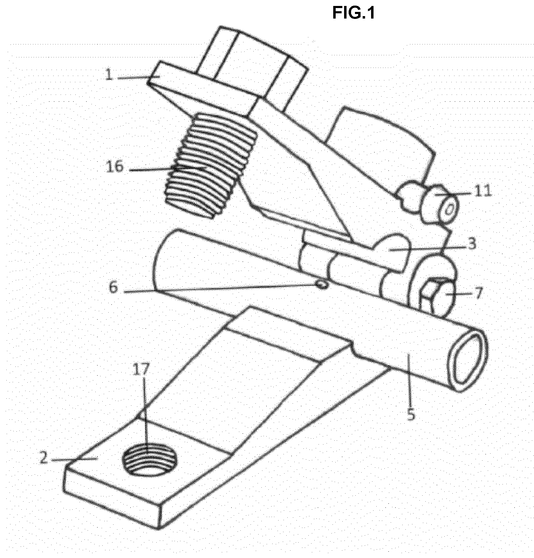

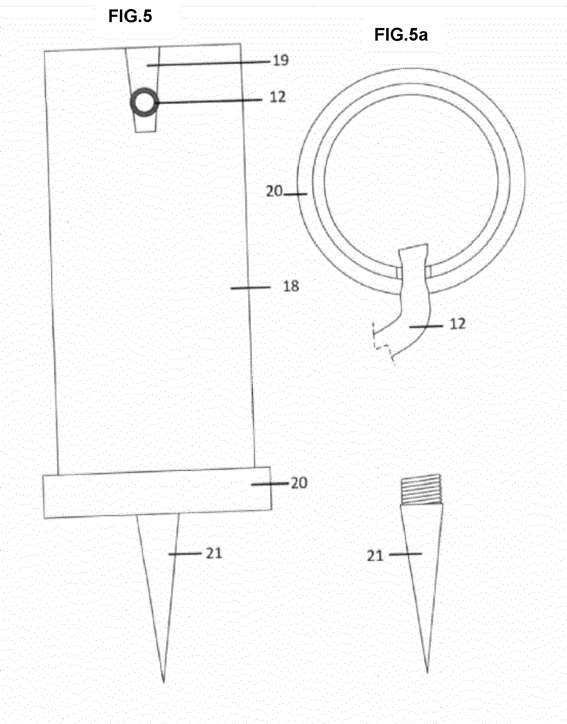

The instrument consists of two elements, a manometric clamp (Figures 1, 2, 3, 4a and 4b) and a graduated measuring vessel (Figures 5, 5a).

The manometric clamp is made up of two pieces (1) and (2), each of them with a cavity near one of its ends in the shape of a half-cylinder (3) developed in a transverse direction to its longitudinal axis.

The two pieces are placed one on top of the other to generate a hollow elliptical cylinder volume (4) that allows the hose (5) to be embraced. These two pieces are joined together by a pin (7) which is inserted into the rotation axis (8).

The upper piece houses the chamber (9) which connects the dripper discharge point or outlet hole (6) with the nut (10) prepared for the connection of the manometer and with the connection of the flexible microtube (12) using the nozzle (11) as a free outlet at atmospheric pressure that can be blocked at will.

To seal the chamber (9) with the outer wall of the hose (5), a groove (14) is made to allow the insertion of an O-ring (13). To take the reading, the dripper hole (6) is centered with respect to the O-ring (13).

The closing of the chamber is achieved by the force exerted by pressing the two pieces together like the arms of a pincer. In order to maintain the pressure exerted by the hand, a free screw (16) is incorporated in one of the arms which allows it to be screwed into a thread (17) on the opposite arm, thus maintaining the pressure. This frees both hands of the operator.

Once the pressure reading has been taken, the microtube is opened and clipped into the slit (19) of the graduated measuring vessel (18). The converging slit makes it easier to attach the microtube to the beaker. One-handed insertion and removal allows simultaneous activation and stopping of the stopwatch. The vessel (18) has a thread centered on the lower external face of its base (20) where the end of a spike (21) can be screwed in, allowing it to be driven into the ground to gain stability against rollover.

The graduation of the measuring vessel, every 0.00005 m³ allows the chronometer to be stopped at the desired volume and thus to calculate the flow rate of the emitter as the volume/time ratio.

In order to supplement the above description and to assist in a better understanding of the features of the invention, a set of drawings is attached as an integral part of said description, where, with an illustrative and non-limiting nature, the following has been represented.
Figure 1.- Shows a perspective view of the manometric clamp.
Figure 2.- Shows a plan view of the manometric clamp.
Figure 3.- Shows a side view of the manometric clamp.
Figure 4 a.- Shows a centered longitudinal section of the manometric clamp.

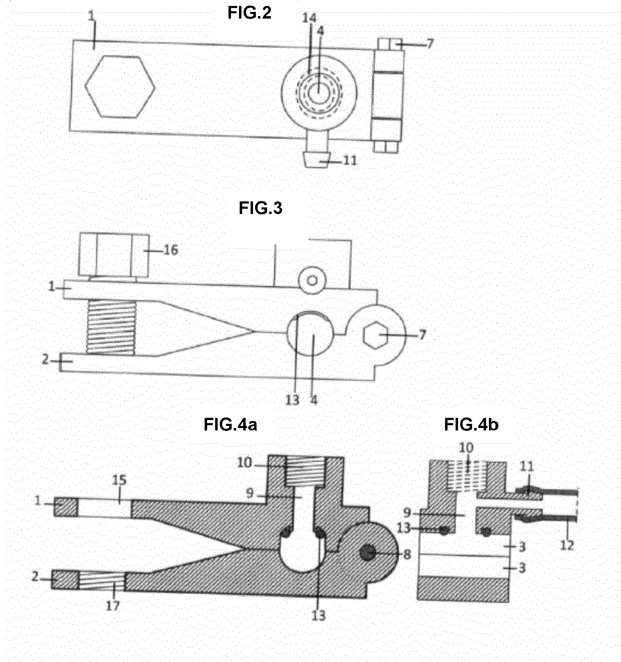

Figure 4 b.- Shows a cross-section centered with respect to the O-ring of the of the manometric clamp.
Figure 5.- Shows a side view of the graduated measuring vessel.
Figure 5 a.- Shows a top view of the graduated measuring vessel.

### Preferred embodiment of the invention

As an illustration, consider a real-world application of the non-destructive instrument for measuring pressure and flow rate in a dripper hose, which is the focus of the current invention. The graduated measuring vessel and the manometric clamp are its two constituent pieces.

The manometric clamp is made up of a camera that, by actuating two arms like a clamp, presses the irrigation hose against an O-ring that surrounds the orifice of a dripper. The chamber opens into a manometer that allows us to know the pressure of the hose once the pressure stabilizes. The chamber has another outlet that connects with a flexible microtube to the graduated measuring vessel. The microtube is held in place by a converging slit at the top of the graduated measuring vessel to ensure emptying into that vessel.

In addition, there is a spike at the base of the graduated measuring vessel to ensure that it can be driven into the ground. The volume of the vessel is marked with increments of 0.00005 m³ up to 0.0002 m^{3.}

### Industrial application

The non-destructive instrument for measuring pressure and flow rate in a dripper hose will be manufactured with materials appropriate to its elements and components, in plastic, PETG or metallic material. The pin (7) is a zinc-plated bolt that secures with a locking nut. The O-ring (13) is made of rubber, having good results with a thickness of 0.0026 m and an external diameter of 0.016 m. The microtube (12) is made of flexible PVC with an inner diameter of 0.007 m and an outer diameter of 0.01 m, with a length of 1 m being sufficient.

## Claims

1. ^{a} Non-destructive instrument for measuring pressure and flow rate in a dripper hose, characterized because it presents:
- a manometric clamp that permits the hose to be clamped and the dripper's output orifice to be linked to the manometer, forming a sealed chamber thanks to the pressure exerted on the two arms of the clamp as a pincer.
- a graduated measuring vessel, which enables the flow rate to be determined with only one hand.

2. ^{a} Non-destructive instrument for measuring pressure and flow rate in a dripper hose, according to claim 1. The manometric clamp is made up of two rigid pieces (1) and (2) which have a cavity shaped like a half cylinder (3) so that when the pieces are placed one on top of the other, the resulting recess is elliptical and cylinder-shaped (4). A segment of hose (5) that is centered on a dripper with its outlet hole (6) facing upwards can be securely embraced thanks to this cylinder. These two pieces are joined together by a pin (7) that is inserted into a rotation axis (8) in such a way that it allows the opening of the pieces (1) and (2) to be able to introduce the hose.
The upper piece (1) houses a chamber (9) that connects three elements:
- the dripper water outlet (6) at the base of the chamber.
- a nut (10) for connection of a manometer, at the top of the chamber.
- a nozzle (11) on the side of the chamber to connect it to the microtube (12) with the graduated measuring vessel.
The sealing of the chamber with the wall of the hose is achieved by means of an O-ring (13) which houses the upper piece (1) in a groove (14).
The free screw (16) head does not pass through the hole (15) in the upper piece (1), but its shank does. This means that when the screw is put into the thread (17) of the lower piece (2) it maintains the pressure exerted on the hose in a stable manner. Thus, the operator's hands are free.

3. ^{a} Non-destructive instrument for measuring pressure and flow rate in a dripper hose, according to claim 1 wherein the graduated measuring vessel consists of a vessel (18) with a converging slit (19) opening in the upper wall of thereof.
The free end of the flexible microtube (12) coming from the nozzle (11) is inserted into the slit (19) ensuring that it is clamped against the walls of the container. The vessel (18) is provided with a thread centered on the lower external face of its base (20) where the end of a spike (21) can be screwed in, allowing it to be driven into the ground to gain stability against rollover.
The slit and the pick are the elements that allow the operator to free one hand to control the stopwatch to the chronometer.
The usable volume of the container must be such that it is capable of collecting at least the volume emitted by the dripper during an interval of 120 seconds. The interior of the container is graduated in proportions of its usable volume.
